# EUROPEAN PATENT APPLICATION

(11) **EP 4 431 463 A1**
(43) Date of publication of application: **18.09.2024**
(21) Application number: 23184090.1
(22) Date of filing: 07.07.2023
(51) Int. Cl.: C01G 53/00, H01M 4/525, H01M 10/54

(54) **DOPED CATHODE MATERIAL FROM RECYCLED LITHIUM-ION BATTERIES**

(30) Priority: 13.03.2023 US 202318120786
(71) Applicant: Ascend Elements, Inc., Westborough, MA 01581 (US)
(72) Inventor: LIU, Yadong, Westborough, MA 01581 (US); DENG, Haixia, Westborough, MA 01581 (US); GRATZ, Eric, Westborough, MA 01581 (US); MISTRY, Dhiren, Westborough, MA 01581 (US); PARMA, Anil, Westborough, MA 01581 (US)
(74) Representative: Greaves Brewster LLP

(57) **Abstract**

A battery recycling process aggregates a recycling stream including charge material metals from exhausted Li-ion batteries and generates recycled battery charge material having comparable or improved cycle life as well as recycled charge material precursor having fewer cracking defects using doping substances in a coprecipitation phase in the recycling sequence. In a coprecipitation process, a solution of comingled charge material metals is produced, the ratio of the charge material metals is adjusted based on recycled battery specifications, and a relatively small quantity of a doping salt is added.

## Description

### BACKGROUND

Lithium-ion (Li-ion) batteries are a preferred chemistry for secondary (rechargeable) batteries in high discharge applications such as electrical vehicles (EVs) and power tools where electric motors are called upon for rapid acceleration. Li-ion batteries include a charge material, conductive powder and binder applied to or deposited on a current collector, typically a planar sheet of copper or aluminum. The charge material includes anode charge material, typically graphite or carbon, and cathode charge material, which includes a predetermined ratio of metals such as lithium, nickel, manganese, cobalt, aluminum, iron and phosphorous, defining a so-called "battery chemistry" of the Li-ion cells. The preferred battery chemistry varies between vendors and applications, and recycling efforts of Li-ion batteries typically adhere to a prescribed molar ratio of the battery chemistry in recycled charge material products. A purity of the constituent products is highly relevant to the quality and performance of the recycled cells, often relying on so-called "battery grade" materials, implying a 99.5% purity.

### SUMMARY

In a battery recycling process, a recycling stream including charge material metals from exhausted Li-ion batteries is aggregated to generate recycled battery charge material precursors having fewer cracking defects as well as recycled battery charge materials having comparable or improved cycle life using doping substances in a coprecipitation phase of the recycling sequence. In the coprecipitation process, a solution of comingled charge material metals is adjusted to have a ratio of the charge material metals based on recycled battery specifications and to have a relatively small quantity of a dopant salt. A doped charge material precursor results from pH adjustment, coprecipitating the charge material metals and the dopant salts, which are then sintered with lithium to form a doped cathode active charge material for a recycled battery having the prescribed chemistry (ratio). Additional doping salts may also be added prior to the sintering to enhance performance properties.

Configurations herein are based, in part, on the observation that Li-ion battery recycling for EVs and other industries generates large quantities of charge material metals in the form of exhausted cathode charge material (cathode material). Unfortunately, conventional approaches to battery recycling suffer from the shortcoming that an unknown history and quality of these recycled cathode materials may vary performance of the resulting cathode material precursors as well as the cathode materials prepared from them. For example, surface properties of the cathode material precursors, such as cracking, as well as the cycle life of the cathode materials can vary depending on the source and properties of the recycled materials from which they are produced.

Accordingly, configurations herein substantially overcome performance issues including cycle life and surface cracking by addition of doping substances, particularly dopant salts, to the recycled battery charge material for coprecipitation and sintering of the charge material with the doping substances. The doping substance is typically another metal salt added in small quantities to a leach solution prior to coprecipitation, and comprises a metal that is different from the metals of the recycled battery charge materials. A typical dopant salt may include magnesium or aluminum and has surprisingly been found to improve the surface morphology of the cathode material precursor and also to improve cycle life of the cathode material, meaning the number of times a battery may be recharged.

In further detail, configurations herein generate a doped cathode material precursor prepared from a recycled lithium-ion battery stream based on a co-precipitated mixture of at least one dopant salt and metallic elements of a selected or predetermined ratio, obtained by leaching a black mass from the recycled lithium-ion battery stream. The coprecipitation reaction results in a dopant-containing granular form of charge material metals, typically in a hydroxide form, which can be used as a precursor (pCAM, Precursor Cathode Active Material) for the formation of a cathode active material (CAM), usable in the manufacture of new/recycled batteries. Prior to coprecipitation, additional metal salts are provided to adjust the ratio of the metallic elements to the selected ratio, and the one or more dopant salts are added, either separately (prior to or subsequently) or during the ratio adjustment for obtaining desired performance improvements. Additional dopant salts may also be added to the precipitated mixture. From the precursor, a sintering process that incorporates lithium salts can be used to generate the corresponding CAM. Thus, doped cathode active material precursors and doped cathode active materials are prepared from the recycled lithium-ion battery stream and include a sintered combination of ratio adjusted metal salts, one or more dopant salts, and lithium salts.

### BRIEF DESCRIPTION OF THE DRAWINGS

The foregoing and other features will be apparent from the following description of particular embodiments disclosed herein, as illustrated in the accompanying drawings in which like reference characters refer to the same parts throughout the different views. The drawings are not necessarily to scale, emphasis instead being placed upon illustrating the principles of the invention.
Fig. 1 is a context diagram of a recycling environment suitable for use with configurations herein.
Fig. 2 is a flowchart for introduction of dopants for charge material performance improvements in the recycling process of Fig. 1.
Figs. 3 and 4 are scanning electron micrographs (SEMs) depicting the surface morphology of charge material precursor particles resulting from the process of Fig. 2.
Fig. 5 is a graph of charge cycle improvements resulting from doping according to the flowchart of Fig. 2.

### DETAILED DESCRIPTION

Depicted below is an example method and approach for recycling batteries, such as NMC batteries. Li-ion batteries employ a so-called battery chemistry, which defines the types and ratios of metal ions used to form the cathode material; anode material is almost always a carbon or graphite-based formulation. Configurations herein employ an NMC battery chemistry as an example. However, the disclosed approach may be practiced with any suitable battery chemistry. The particular ratio is set by the manufacturer or recipient of the recycled charge material, and charge material and charge material precursor can be generated meeting the manufacturer prescribed specifications.

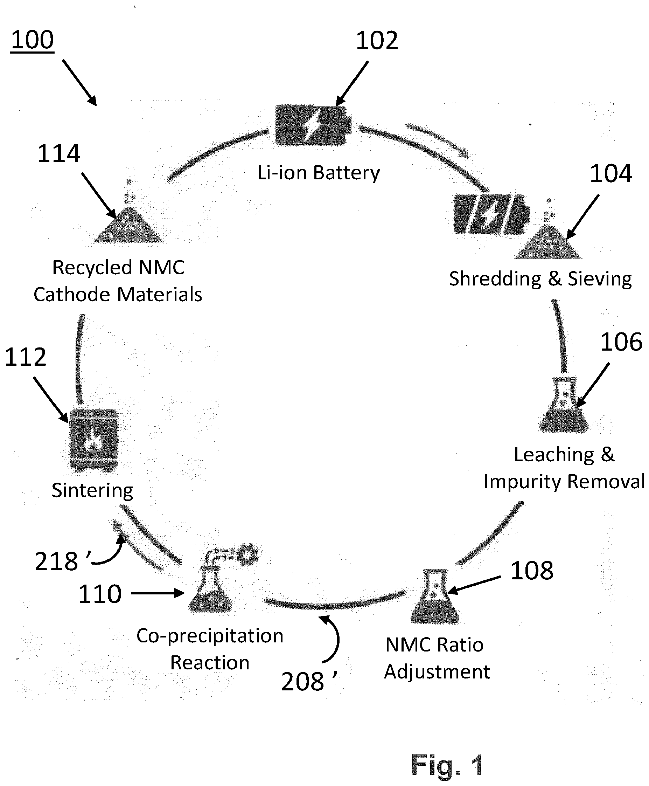

Fig. 1 is a context diagram of a recycling environment suitable for use with configurations herein. Referring to Fig. 1, a recycling scenario 100 begins with a deployed Li-ion battery 102, typically from an EV. Li-ion batteries 102 have a finite number of charge cycles before the ability of the charge material to accept sufficient charge degrades substantially. Add to this the batteries from premature end-of-life due to vehicle failure, collision damage, etc. This collective end-of-life recycling stream contributes to an abundant supply of exhausted batteries comprising spent cells and charge material. The batteries are discharged and agitated into a granular black mass 104 through physical grinding, shredding and pulverizing, this black mass including the charge material and any incidental casing and current collectors of copper and aluminum. The black mass, including both cathode material of cathode material metal salts and anode materials of carbon and graphite, is used to form a leach solution 106 of dissolved charge material metals.

The leach solution includes Ni, Mn and Co salts, such as sulfate salts from sulfuric acid leaching, however other charge material metals and/or leach acid may be employed. The leach solution 106 has a molar ratio of Ni, Mn and Co based on the constituent composition of the incoming recycling stream. The molar ratio is adjusted with additional Ni, Mn and Co salts, such as sulfate (typically a virgin or control form of fresh materials) to yield a target ratio-adjusted solution 108.

A coprecipitation reaction in one or more vessels 110 begins by adjusting the pH of the leach solution for precipitating the charge material metals (charge materials) in the desired ratio resulting from the adjustment. Sodium hydroxide or other strong base causes the NMC to fall out of solution in a granular form, separable by filtration, typically as hydroxides. This granular form precipitated from the pH adjustment of the leach solution defines the pCAM (cathode active material precursor), having the desired molar ratio for a target battery chemistry for new, recycled batteries. Sintering in a furnace 112 with lithium carbonate or other lithium salts forms the cathode active material 114 (CAM) for the recycled Li-ion battery. In an example configuration, cathode active material LiNiₓMn_{y}Co_{z}O₂ is synthesized by sintering NiₓMn_{y}Co_{z}(OH)₂ and Li₂CO₃, where x, y and z represent the respective molar ratios of Ni, Mn and Co. Common chemistries include NMC 111, representing equal molar components of Ni, Mn and Co, NMC 811, NMC 622 and NMC 532, however any suitable molar ratio may be achieved by the ratio adjustment in the leach solution 106-108 and sintering. The recycled cathode material may then be merged back into the recycling stream as cathode material.

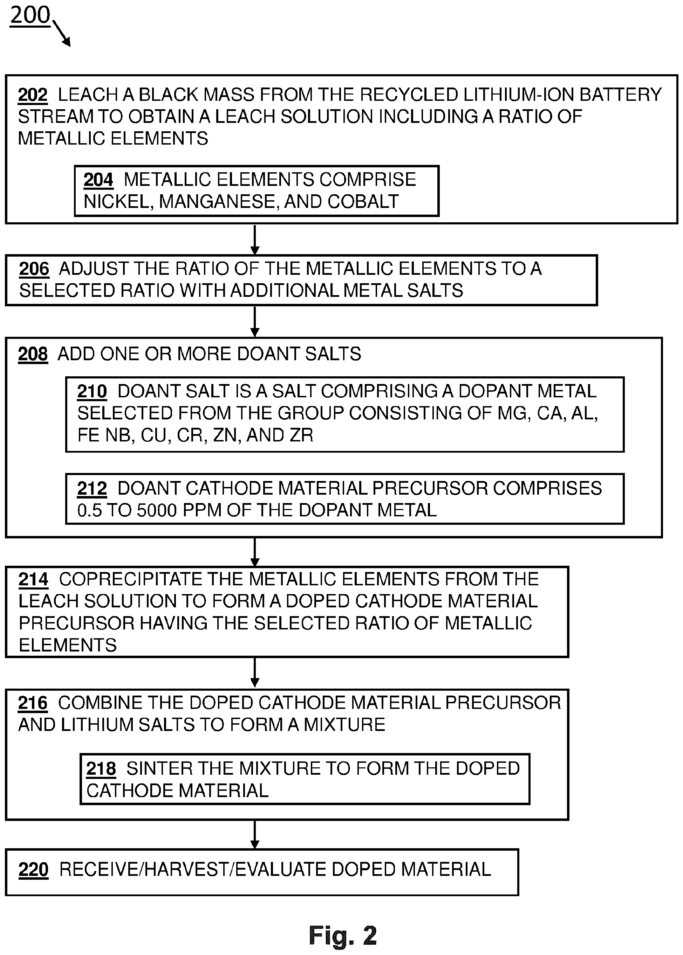

Fig. 2 is a flowchart 200 for introduction of dopants for obtaining charge material having performance improvements in the recycling process of Fig. 1. The dopants include relatively small amounts of salts added into the leach solution for coprecipitation 110. Optionally, additional dopants may also be introduced into the lithium mixture for sintering 112.

Referring to Figs 1 and 2, the method of producing a doped cathode material from a recycled lithium-ion battery stream includes, at step 202, leaching a black mass from the recycled lithium-ion battery stream to obtain a leach solution including a ratio of metallic elements. Following impurity removal, such as by filtration, the leach solution is a substantially pure composition of metallic elements including nickel, manganese, and cobalt, as depicted at step 204. Other cathode material metals may also be dissolved, depending on the source of the recycled battery stream. Anode material is generally undissolved after leaching at 202, which can be removed as the substantially pure leach solution is drawn off. Separate recycling of the residual anode material may also be performed. The ratio of the metallic elements is adjusted to a selected ratio with additional metal salts to correspond to a selected cathode material ratio, which often corresponds to a targeted recycled battery chemistry, as shown at step 206.

One or more doping agents is also added to the leach solution. Doping may be performed with a number of materials, usually water-soluble salts, and in various concentrations, to achieve performance improvements, referring to step 208. These are added to the leach solution prior to coprecipitation.

Thus, the addition of the dopant salt is followed by co-precipitating of the metallic elements from the leach solution to form a doped cathode material precursor having the selected ratio of metallic elements, as disclosed at step 214. Coprecipitation involves adjusting the pH (raising) to draw the comingled charge materials out of solution in the adjusted ratio including the doping salts.

In an example configuration, the dopant salt is a salt comprising a dopant metal selected from the group consisting of Mg, Ca, Al, Fe, Nb, Cu, Cr, Zn, and Zr, as shown at step 210. This results in a doped cathode material precursor having between 0.5 and 5000 ppm of the dopant metal, as depicted at step 212. As noted above, optionally additional dopant salts may also be added to the coprecipitated mixture prior to sintering with lithium salts (typically lithium carbonate).

Specific examples of dopant concentrations (in ppm) for particular doping salts are shown below in Table I.

**TABLE I**

| Salt | Amt Dopant Salt in Cathode Precursor (ppm) |
|---|---|
| Mg | 50-2000 |
| Ca | 20-5000 |
| Al | 1-6000 |
| Fe | 1-1000 |
| Cu | 1-300 |
| Cr | 1-300 |
| Zn | 1-300 |
| Zr | 0.5-2000 |
| Nb | 1-3000 |

Surprisingly, it has been found that incorporation of low levels of various types of dopant salts prior to co-precipitation results in the formation of doped cathode material precursors having significantly improved properties. In particular, it is believed that doping of the leach solution provides relief of the internal particle stresses present in the forming cathode material precursors, resulting in precursor particles having significantly improved physical and surface properties. Benefits to the particle morphology include fewer cracks than a comparative cathode material precursor prepared without addition of the dopant salt to the leach solution prior to co-precipitation.

The amount of cracking can be evaluated using any method known in the art. For example, doped cathode material precursor has been found to have a BET surface area value that is lower than a BET value of a comparative cathode material precursor prepared without the addition of dopant salts to the leach solution prior to co-precipitation. The BET value of the doped cathode material precursor may be 2-3 times lower than the BET value of the comparative cathode material precursor.

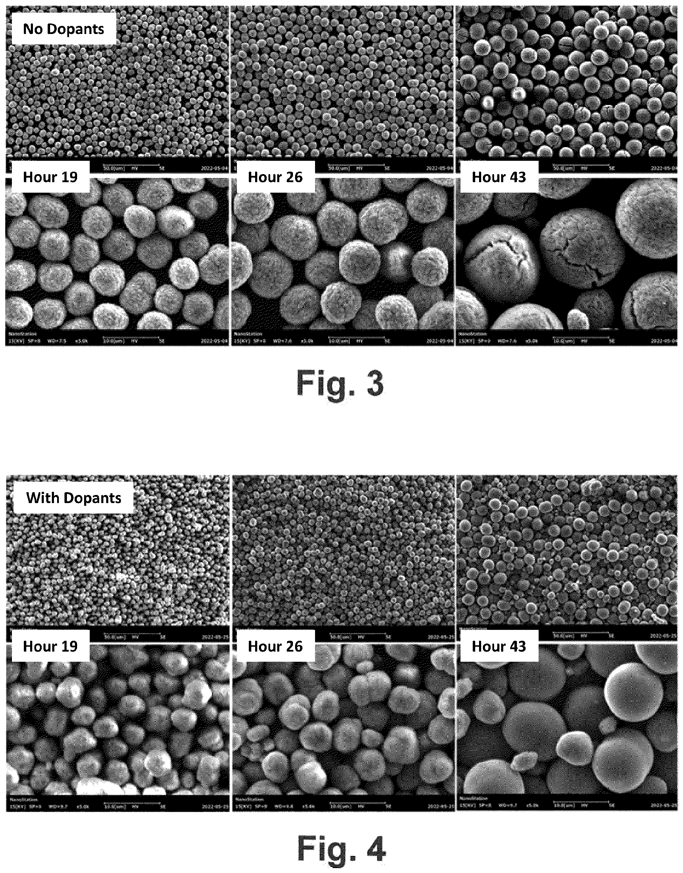

Surface morphology can also be assessed by microscopy. Specific evaluation results are shown in Figs. 3 and 4, which are SEM (scanning electron micrographs) images depicting surface morphology of charge material precursor particles resulting from the dopant method described in Fig. 2. Fig. 3 shows a control group of undoped charge material particles at various times during the co-precipitation process. By comparison, Fig. 4 shows formation of the doped charge material precursors particles of the present disclosure in which dopant salts have been added prior to coprecipitation. In this specific example, the process includes the addition of aluminum nitrate salt to the nickel manganese cobalt sulfate solution prior to coprecipitation.

As shown, surface cracking is significantly reduced, which is believed to be a result of internal stress release provided by the dopant salts during particle growth and, consequently, prevention the cracking of particles. In Fig. 4, the well-defined and continuous particle surface in a single crystal form can be seen, with a notable improvement over visible cracks seen in Fig. 3. Thus, the doped cathode material precursor particles have been found to have fewer visible cracks within a single precursor particle. In addition, fewer precursor particles that are formed have been found to have any visible cracks. Preferably, less than 10%, more preferably less than 5%, and most preferably less than 1% of the resulting doped cathode material precursor particles have cracks.

In particular configurations, the doped cathode material precursor comprises greater than 60% nickel, as a high nickel cathode material has been found to particularly benefit from the doping process. This includes NMC 622 and NMC 811. Other configurations with lower nickel may also benefit, as when the doped cathode material is less than or equal to 60% nickel, including from 10% to 50% nickel, such as NMC 532.

Furthermore, the doped pCAMs have also been found to improve a lattice structure resulting in the sintered CAM, thereby improving charge cycle performance. For example, the doped cathode material precursor and lithium salts can be combined to form a mixture, as depicted at step 216, and the mixture is then sintered to form the doped, now cathode active material, as shown at step 218. Following sintering, the doped cathode active material is received to be harvested and/or evaluated, as depicted at step 220.

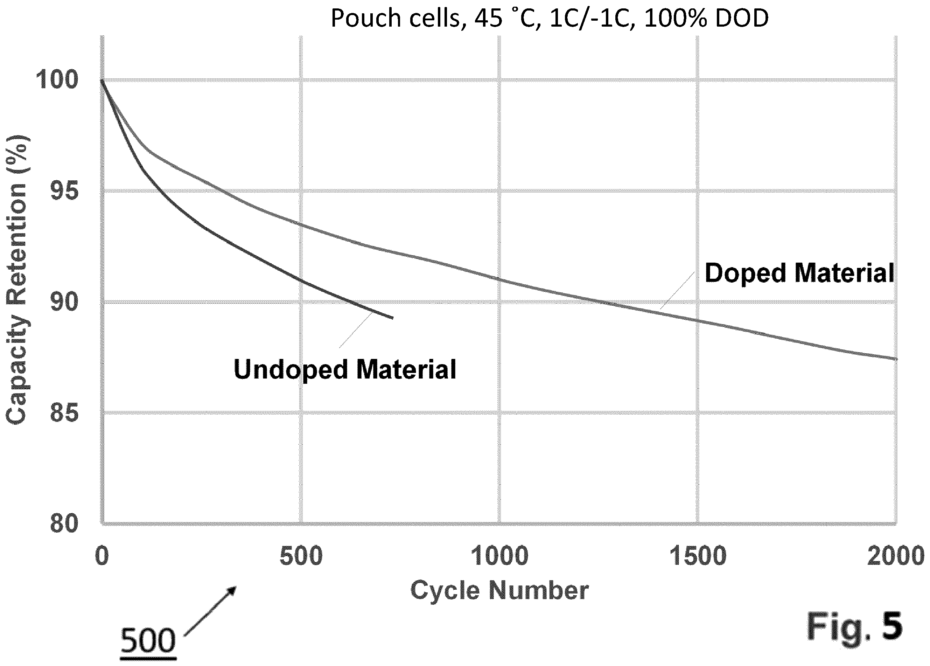

Fig. 5 is a graph 500 of charge cycle improvements resulting from doping according to the flowchart of Fig. 2. In Fig. 5, capacity retention refers to a percentage of a full charge remaining after a number of charge/discharge cycles, shown by the charge index. It has been surprising found that the inclusion of dopant salts prior to the co-precipitation reaction to form a doped charged material precursor also significantly improves the cycle life of a doped charged material prepared from it. For example, doping of a relatively small amount of Mg, on the order of 200 ppm, improved cycling performance, retaining greater than 90% of full charge after approximately 1240 cycles and 80% of full charge capacity after approximately 5000 cycles. Other doping salts may also be employed to provide similar or improved performance.

In specific configurations, the dopant salt is a Mg salt or an Al salt. For example, a particular arrangement is a doped cathode material precursor having between 1-100 ppm of an Al dopant salt. In still other arrangements, the dopant salt is a Li salt and the doped cathode material precursor has < 0.01 ppm of Li. Note that the Li dopant is added at the leaching phase, prior to coprecipitation, and should not be confused with lithium carbonate added for sintering of the precipitated material.

While the system and methods defined herein have been particularly shown and described with references to embodiments thereof, it will be understood by those skilled in the art that various changes in form and details may be made therein without departing from the scope of the invention encompassed by the appended claims.

## Claims

1. A method of producing a doped cathode material from a recycled lithium-ion battery stream, comprising
leaching a black mass from the recycled lithium-ion battery stream to obtain a leach solution including a ratio of metallic elements;
adjusting the ratio of the metallic elements to a selected ratio with additional metal salts;
adding one or more dopant salts to the leach solution;
co-precipitating the metallic elements and dopant salts from the leach solution to form a doped cathode material precursor having the selected ratio of metallic elements;
combining the doped cathode material precursor and lithium salts to form a mixture; and
sintering the mixture to form the doped cathode material.

2. The method of claim 1, wherein the dopant salt is a salt comprising a dopant metal selected from the group consisting of Mg, Ca, Al, Fe, Nb, Cu, Cr, Zn, and Zr.

3. The method of claim 2, wherein the doped cathode material comprises 0.5 to 5000 ppm of the dopant metal.

4. The method of any preceding claim, wherein the dopant salt is a Mg salt or an Al salt.

5. The method of any preceding claim, wherein the dopant salt is aluminum nitrate.

6. The method of any preceding claim, wherein the doped cathode material precursor comprises 1-100 ppm of Al.

7. The method of any preceding claim, wherein the metallic elements comprise at least one of nickel, manganese, and cobalt, preferably wherein the metallic elements are nickel, manganese, and cobalt.

8. The method of any preceding claim, wherein the doped cathode material precursor comprises less than or equal to 60% nickel, preferably wherein the doped cathode material precursor comprises from 10% nickel to 50% nickel, more preferably wherein the doped cathode material precursor is NMC532.

9. The method of any preceding claim, wherein the doped cathode material precursor has a single crystal structure.

10. The method of any preceding claim, wherein the doped cathode material has a single crystal structure.

11. The method of any preceding claim, wherein the lithium salt is lithium carbonate.

12. A doped cathode material prepared from a recycled lithium-ion battery stream, comprising a sintered combination of:
a doped cathode material precursor comprising a co-precipitated mixture of:
metallic elements in a ratio obtained by leaching a black mass from the recycled lithium-ion battery stream;
additional metal salts provided to adjust the ratio of the metallic elements to a selected ratio; and
one or more dopant salts provided prior to co-precipitation, and lithium salts.

13. The doped cathode material of claim 12, wherein the dopant salt is a salt comprising a dopant metal selected from the group consisting of Mg, Ca, Al, Fe, Nb, Cu, Cr, Zn, and Zr.

14. The method of any of claims 1 to 11, or the doped cathode material of claims 12 or 13, wherein the doped cathode material retains greater than 90% of full charge capacity after 1240 cycles.

15. The method of any of claims 1 to 11, or the doped cathode material of any of claims 12 to 14, wherein the doped cathode material retains at least 80% of full charge capacity after 5000 cycles.
